# EUROPEAN PATENT SPECIFICATION

(11) **EP 1 320 975 B1**
(45) Date of publication and mention of the grant of the patent: **07.12.2005**
(21) Application number: 01973366.6
(22) Date of filing: 21.09.2001
(51) Int. Cl.: H04L 29/06, H04Q 7/38

(54) **INTERNET PROTOCOL TELEPHONY SECURITY ARCHITECTURE**
SICHERHEITSARCHITEKTUR DER INTERNET-PROTOKOLL TELEFONIE
ARCHITECTURE DE SECURITE TELEPHONIQUE DE PROTOCOLE INTERNET

(30) Priority: 22.09.2000 US 668426
(43) Date of publication of application: 25.06.2003
(73) Proprietor: GENERAL INSTRUMENT CORPORATION, Horsham, Pennsylvania 19044 (US)
(72) Inventor: MEDVINSKY, Sasha, San Diego, CA 92129 (US)
(74) Representative: Bohnenberger, Johannes
(86) International application number: PCT/US2001/029654
(87) International publication number: WO 2002/025899

(56) References cited:
- US-A- 5 590 199
- US-A- 5 668 876
- US-A- 6 058 480

## Description

This application claims priority from co-pending PCT Application No. PCT/US00/09318 filed on April 7, 2000 entitled, "Built-in Manufacturer's Certificates for a Cable Telephony Adapter to Provide Device and Service Certification," which claims priority from U.S. Application No. 60/128,772 entitled, "Internet Protocol Telephony Security Architecture" filed on April 9, 1999, as well as PCT Application No. PCT/US00/02174 filed on January 28, 2000 entitled "Key Management for Telephone Calls to Protect Signaling and Call Packets Between CTA's.

### BACKGROUND

This invention relates generally to network security, and more particularly, to a system for providing key management between a server and a client, e.g., in a telephony or an IP telephony network.

In networks that are based on a client/server configuration, there is a need to establish a secure channel between the server and the clients. US-A-6,058,480 discloses a system wherein there is provided a server, a client configured to be coupled to the server and furthermore, there exists a trusted third party coupled to the client which operates key management within the network. In addition, in networks that utilize a third party to certify a trust relationship, there is a need to provide an efficient mechanism that allows a key management message to be initiated by the server.

In such networks that utilize a trusted third party for the server and client, the client can typically request an encrypted authentication token from the trusted third party that can be used to initiate key management with the specified server; however, the server will typically initiate the key management session directly with the client. It is less preferable for the server to obtain from the trusted third party encrypted authentication tokens for each of the clients. Such an approach would add overhead to a server, requiring it to maintain cryptographic state for each of the clients. If such a server were to fail, a backup server would be required to undergo a recovery procedure in which it has to obtain new authentication tokens for each of the clients. The clients need to be initialized during their provisioning phase to allow them to successfully authenticate to a trusted third party and obtain the encrypted authentication tokens. One proposed method for client initialization is disclosed in PCT Application No. PCTIUS00/09318 entitled "BUILT-IN MANUFACTURER'S CERTIFICATES FOR A CABLE TELEPHONY ADAPTER TO PROVIDE DEVICE AND SERVICE CERTIFICATION." Nevertheless, a need exists to provide an efficient mechanism through which the server can initiate the key management session with the client, as opposed to a system in which only the client can initiate such a session.

One such client/server network is the client/server network that exists in IP telephony. In IP telephony systems, a cable telephony adapter (CTA) device can be used to allow a user to send and receive information in secure transactions over an IP telephony network. In typical operation, a series of signaling messages are exchanged that register the CTA device with the IP telephony network before a secure channel with another user can be established. Therefore, the CTA device needs to be authenticated by the IP telephony system. Otherwise, the process would be open to denial of service attacks - since some provisioning exchanges can be forged. In addition, it is desirable for the service provider to identify the CTA device - to make sure that only authorized devices are allowed in its IP Telephony network.

### SUMMARY OF THE INVENTION

The invention provides a method and a system for providing key management in a client/server network in accordance with claims 1 and 16.

In addition, one embodiment can be implemented in code and by circuitry operable to produce the acts of the method.

A further understanding of the nature of the inventions disclosed herein - will be realized by reference to the remaining portions of the specification and the attached drawings.

### BRIEF DESCRIPTION OF THE DRAWINGS

FIG. 1 shows a flow chart demonstrating an overview of one embodiment of the invention.
FIGS. 2A and 2B show a more detailed flow chart demonstrating a key management session between a server and a client.
FIG. 3 shows steps of a key management session after the key management session is initiated.
FIG. 4 shows a general block diagram of a client/server/trusted third party network.
FIG. 5 shows a block diagram of an IP telephony network in which a cable telephony adapter, a signaling controller, and a key distribution center are coupled with one another.
FIG. 6 shows the implementation of the data structures for establishing a key management session as implemented by one embodiment of the invention.

### DESCRIPTION OF THE SPECIFIC EMBODIMENTS

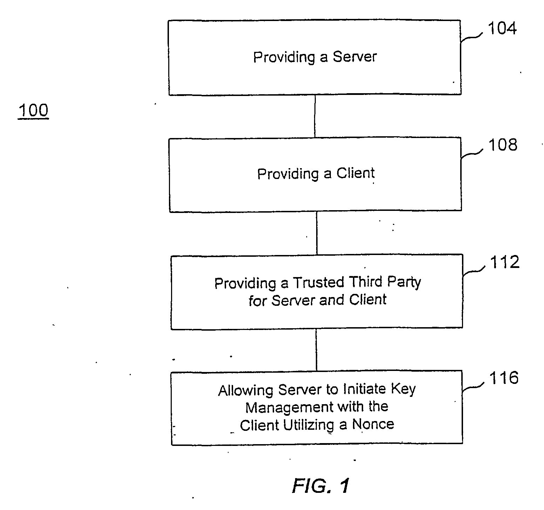

FIG. 1 shows a flow chart demonstrating an overview of one embodiment of the invention. In flow chart 100, a server is provided 104 and a client coupled to the server is also provided 108. A trusted third party for the server and the client is provided 112 and the server is allowed to initiate a key management session with the client by utilizing a nonce 116.

It should be understood that a server is a shared computer on a network, such as a signaling controller used in an IP telephony network. Furthermore, it should be understood that a client is a computer or device served by another network computing device, such as a cable telephony adapter (client) being served by a signaling controller (server) via an IP telephony system. In addition, it should be understood that a trusted third party for the server and the client is a device or computer utilized by at least two parties that facilitates cryptographic processes such as certifying the identity of one of the two parties to the other. Finally, it should be understood that a nonce is a number generated that is utilized only once. The use of a nonce helps to prevent an attacker from implementing a replay attack. Such a nonce can be generated randomly.

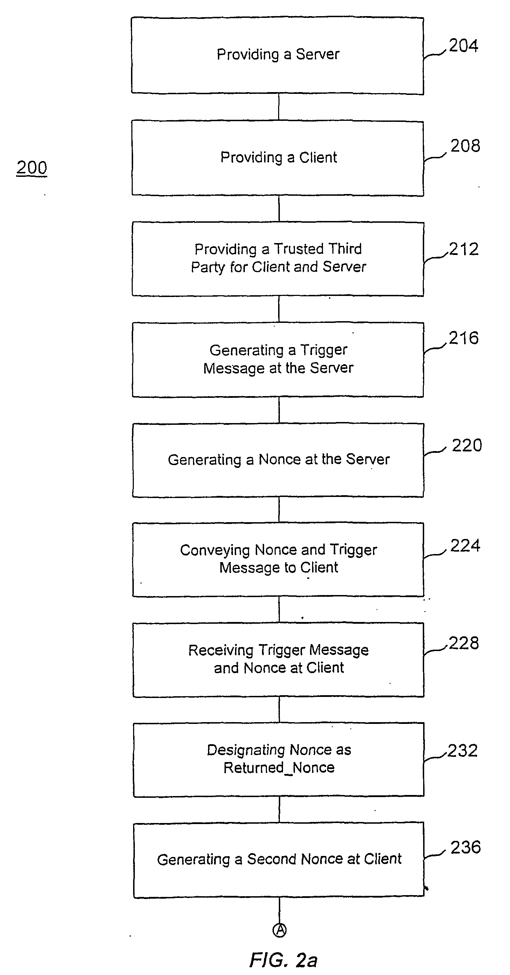

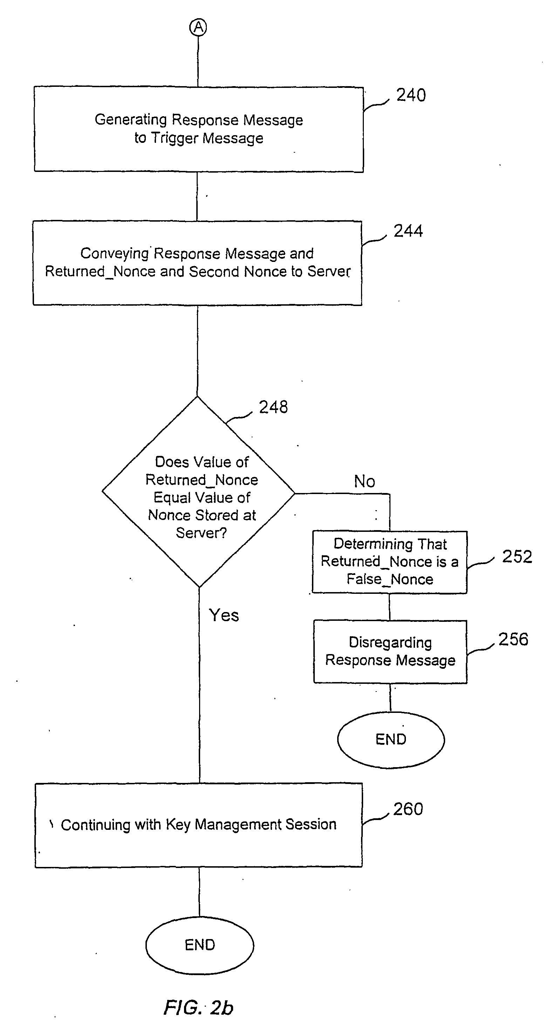

The method of FIG. 1 can be better understood by reference to FIG. 2A and FIG. 2B. In the method designated 200 in FIG. 2A and FIG. 2B, a server such as a signaling controller in an IP telephony system is provided 204. In addition, a client such as a cable telephony adapter in an IP telephony system is also provided 208. A trusted third party for the client and server, such as a key distribution center in an IP telephony system, is provided 212, as well. The server, client, and trusted third party are coupled to one another. Typically, the client initiates key management sessions with the server. However, there will be times when the server will need to initiate a key management session with the client. Rather than authenticating the trigger message (e.g. with a digital signature and certificate), the invention can utilize a nonce in the authentication of the subsequent AP Request message from the client. This embodiment of the invention does not prevent an adversary (impersonating a legitimate server) from sending an illicit trigger message to the client and fooling it into responding with an AP Request. Instead it provides that such an AP Request will be rejected by the legitimate server. This mechanism is designed to reduce the server's overhead of initiating key management exchanges with its clients, while still maintaining sufficient security. Thus, in 216 a trigger message is generated at the server to initiate a key management session. Then, a nonce is generated at the server 220 and the nonce and trigger message are coupled together and conveyed to the client 224. The client receives the trigger message and the nonce 228. Then the client designates the nonce as a returned_nonce 232. In this way, the client can return the received nonce to the server for verification that the message is from the client. In 236, a second nonce is generated at the client. The second nonce is for use by the server and client as part of the key management session being initiated. The client generates a response message to the trigger message that was received from the server 240. Then the response message, the returned_nonce, and the second nonce are conveyed to the server 244:

At the server, an out-of-bounds value for said returned_nonce is determined and the value of the returned_nonce is compared to the value of the nonce which was generated at the server and with the said out-of-bounds value. If the values of the returned_nonce and the nonce stored at the server are equivalent, the key management session can proceed.

However, if the value of the returned_nonce does not equal the value of the nonce stored at the server then a determination is made that the returned_nonce is actually a false nonce 252. In such a case there is a possibility that the signal has been corrupted; or, there is a possibility that an attacker is trying to initiate a service attack. In a service attack, the attacker tries to fraudulently initiate a rekeying session in order to cause the server to utilize processor cycles which prevent the processor from utilizing those cycles for other operations. Thus the server would become less effective under such an attack than it would be under normal conditions. By repeating such an attack, an attacker can prevent the server from operating efficiently and thus can compromise the operation of the client server network, such as an IP telephony network. If the returned_nonce is determined to be not equivalent to the value of the nonce stored at the server, the response message sent with the returned_nonce is disregarded as being unauthenticated 256. However, if the returned_nonce does equal the value of the nonce stored at the server, then the key management session continues 260.

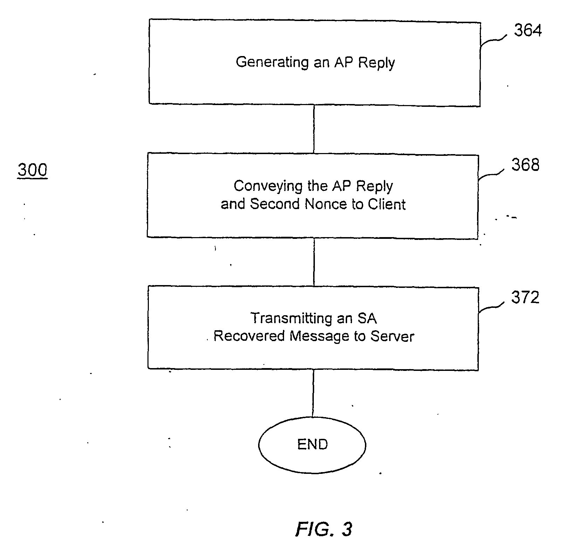

FIG. 3 shows additional steps in a typical key management session as highlighted by block 260 in FIG. 2B. In FIG. 3, method 300 shows that an application (AP) REPLY is generated 364 by the server. The AP REPLY is conveyed to the client with the second nonce that was generated by the client 368. The AP Request is an abbreviation for Application Request and AP Reply stands for Application Reply. For example, these two messages can be specified by the Kerberos Key Management standard (see IETF RFC 1510): As a further example, in the context of Kerberos, the second notice can be the client's time expressed in microseconds. When the AP REPLY and second nonce are received at the client, the client transmits a security association (SA) recovered message to the server 372. This completes the applicable Kerberos key management session.

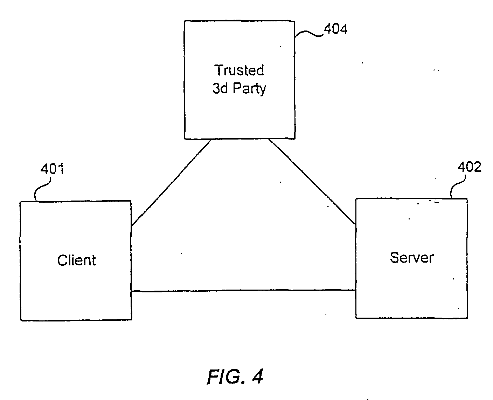

FIG. 4 shows a block diagram of a client/server/trusted third party network. A client 401 is coupled with a server 402. In addition, the client is coupled with a trusted third party 404. The trusted third party is also coupled with the server 402. FIG. 4 thus demonstrates the network within which one embodiment of the invention can be implemented.

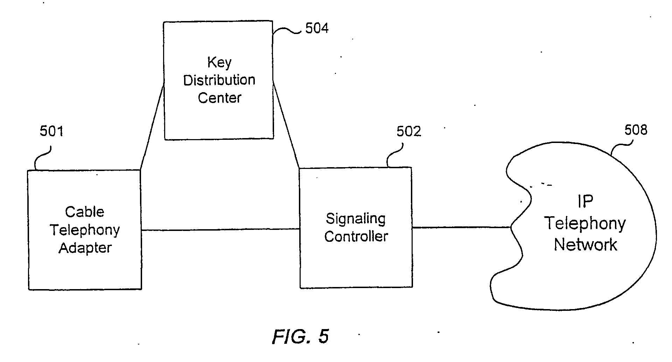

In FIG. 5 an IP telephony network implementing one embodiment of the invention is demonstrated. A client such as a cable telephony adapter 501 is coupled with a server, such as signaling controller 502. Furthermore, the cable telephony adapter and signaling controller are also coupled to a trusted third party, illustrated as key distribution center 504. Furthermore the signaling controller is coupled with the IP telephony network 508. Such a network as that illustrated in FIG. 5 would be useful for establishing an IP telephony call from a user who is coupled to the cable telephony adapter through the IP telephony network 508 to another user connected to a similar network. Thus the user can be authenticated as the calling party through the cable telephony adapter and signaling controller when the call is placed across the IP telephony network. Further details of such a network are illustrated in the references which were incorporated by reference.

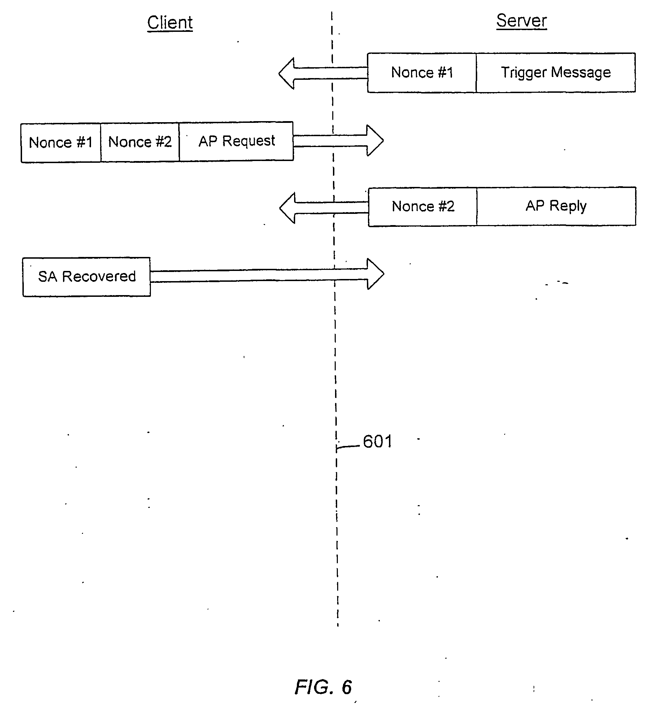

FIG. 6 illustrates data structures for implementing a Kerberos key management session initiated by a server in a client/server network. In FIG. 6 a nonce number 1 is coupled with an initiation signal such as a trigger or wakeup message and the combined message is transmitted across an interface 641 to the client. The client stores nonce number 1. It then adds nonce number 2 and an application request (AP Request) in data structure such as that shown in FIG. 6. This set of data is then transmitted across the interface back to the server. The server compares the value of received nonce number 1 with the value of nonce number 1 stored at the server so as to confirm the authenticity of the AP Request Upon authenticating the AP Request, the server generates an AP Reply and couples it with nonce number 2 which was generated by the client The combined nonce number 2 and AP Reply are then transmitted across the interface to the client The client is able to verify the authenticity of the AP Reply by comparing the value of nonce number 2 received from the server with the value of nonce number 2 stored at the client. Upon authenticating the AP Reply, the client generates a Security Association (SA) recovered message and transmits that across the interface to the server. This Kerberos-based key management protocol is thereby implemented in an efficient way and furthermore allows the server to initiate the key management session with the use of only an additional nonce as overhead to the initiation message. Thus the method is highly efficient in that only a nonce need be used in the authentication process of the initiation message.

In addition to embodiments where the invention is accomplished by hardware, it is also noted that these embodiments can be accomplished through the use of an article of manufacture comprised of a computer usable medium having a computer readable program code embodied therein, which causes the enablement of the functions and/or fabrication of the hardware disclosed in this specification. For example, this might be accomplished through the use of hardware description language (HDL), register transfer language (RTL), VERILOG, VHDL, or similar programming tools, as one of ordinary skill in the art would understand. The book "A Verilog HDL Primer" by J. Bhasker, Star Galaxy Pr., 1997 provides greater detail on Verilog and HDL. It is therefore envisioned that the functions accomplished by the present invention as described above could be represented in a core which could be utilized in programming code and transformed to hardware as part of the production of integrated circuits. Therefore, it is desired that the embodiments expressed above also be considered protected by this patent in their program code means as well.

It is noted that embodiments of the invention can be accomplished by use of an electrical signal, such as a computer data signal embodied in a carrier wave, to convey the pertinent signals to a receiver. Thus, where code is illustrated as stored on a computer medium, it should also be understood to be conveyable as an electrical signal. Similarly, where a data structure is illustrated for a message, it should be understood to also be capable of being embodied in an electrical signal for transmission across a medium, such as the intemet.

It is also noted that many of the structures and acts recited herein can be recited as means for performing a function or steps for performing a function, respectively. Therefore, it should be understood that such language is entitled to cover all such structures or acts disclosed within this specification and their equivalents, including the matter incorporated by reference.

## Claims

1. A method of providing key management comprising:
providing a server (204);
providing a client (208) configured to be coupled to said server (204);
providing a trusted third party (212) configured to be coupled to said client (208);
**characterized by**,
generating a trigger message at said server (216);
generating a nonce at said server (220);
conveying said trigger message and said nonce to said client (224);
receiving said trigger message and said nonce at said client (228); and
designating a nonce as a returned_nonce at said client (232);
generating a second nonce at said client (236);
generating a response message to the trigger message that was received from the server (240);
conveying the response message, the returned_nonce, and the second_nonce to the server (244);
comparing the value of the returned_nonce to the value of the nonce which was generated at the server (248).

2. The method as described in claim 1, and further comprising:
predetermining an out-of-bounds value for said nonce;
checking said nonce to determine whether the value of said nonce is said out-of-bounds value.

3. The method as described in claim 1, and further comprising:
confirming the value of said returned_nonce at said server; and conveying a reply message from said client to said server.

4. The method as described in one of claims 1 to 3, and further comprising:
receiving from said client a response message and a false_nonce at said server (252); determining that said false_nonce is false; disregarding said client response message (256).

5. The method as described in claim 1, for use in a Kerberos based system, wherein a key distribution center (504) is configured to act as a trusted third party.

6. The method as described in claim 5, and further comprising:
conveying said trigger message and said nonce to said client (224);
so as to initiate a Key management session between said server and said client.

7. The method as described in claim 6, and further comprising:
receiving said trigger message and said nonce at said client (228);
generating a response message to said trigger message;
conveying said response message and a returned_nonce to said server.

8. The method as described in claim 7, and further comprising:
confirming the value of said returned_nonce at said server; and then continuing with said key management session.

9. The method as described in claim 5, and further comprising:
receiving at said server a response message and a false_nonce from said client (252);
determining that said false_nonce does not match said nonce (256);
determining that said server did not initiate said key management session.

10. The method as described in claim 1, for a cable telephony adapter (CTA) (501) and a Signaling Controller (502) in an IP Telephony network, the method further comprising:
providing said Signaling Controller (502) as said server;
providing said CTA (501) configured to be coupled to said Signaling Controller (502) as said client;
providing a key distribution center (KDC) (504);
generating said trigger message at said Signaling Controller;
generating said nonce at said Signaling Controller; coupling said nonce with said trigger message;
transmitting said nonce coupled with said trigger message to said CTA; generating a response message to said trigger message;
using the value of said nonce as the value of a returned_nonce; coupling said response message with said returned_nonce;
generating a second_nonce at the client;
transmitting said returned_nonce, second_nonce and said response message to said Signaling Controller;
comparing said returned_nonce to said nonce; transmitting an AP reply in reply to said response message and the second_nonce;
transmitting an SA recovered message to said Signalling Controller.

11. The method as described in claim 1, for conveying a key from a server to a client, further comprising:
generating a wakeup message at said server; generating a server_nonce at said server;
conveying said wakeup message and said server_nonce to said client; generating an AP request message at said client;
generating a second_nonce at the client;
conveying a client_nonce and said AP request message to said server; and
confirming that said client_nonce, the second_nonce conveyed with said AP request message matches said server_nonce generated at said server.

12. The method as described in claim 1, for confirming that a message received by a server from a client was triggered by the server, further comprising:
receiving an AP request message from said client;
receiving a second_nonce from said client;
receiving a client_nonce from said client wherein said client_nonce is associated with said AP request; and
determining whether said client_nonce matches a nonce conveyed from said server.

13. The method as described in claim 12, and further comprising:
determining that said client_nonce does not match said nonce conveyed from said server; and
disregarding said AP request.

14. The method as described in claim 13, and further comprising:
awaiting at said client for a reply from said server to said AP request;
aborting said AP request session after a predetermined time period if no reply is received from said server.

15. The method as described in claim 12, and further comprising:
determining that said client_nonce does match said nonce conveyed from said server; and
generating an AP reply at said server to said AP request.

16. A system for providing key management in a Kerberos based system said system comprising:
a server;
a client configured to be coupled to said server;
a key distribution center configured to act as a trusted third party for said client and said server;
**characterized by**,
computer code operable to generate a trigger message at said server;
computer code coupled to said server operable to generate a nonce at said server;
computer code coupled to said server operable to convey said trigger message and said nonce to said client;
computer code coupled to said client operable to receive said trigger message and said nonce at said client;
computer code coupled to said client operable to designate a nonce as a returned_nonce at said client;
computer code coupled to said client operable to generate a second_nonce at said client;
computer code coupled to said client operable to generate a response message to said trigger message;
computer code coupled to said client operable to convey said response message the returned_nonce and the second_nonce to said server;
computer code coupled to said server operable to compare the value of the returned_nonce to the value of nonce which was generated by the server.

## Patentansprüche

1. Ein Verfahren zum Bereitstellen von Schlüsselverwaltung, das Folgendes umfasst:
Bereitstellen eines Servers (204);
Bereitstellen eines Client (208), der konfiguriert ist, um an den Server (204) gekoppelt zu werden;
Bereitstellen einer vertrauenswürdigen dritten Partei (212), die konfiguriert ist, um an den Client (208) gekoppelt zu werden;
**gekennzeichnet durch**:
Erzeugen einer Triggernachricht an dem Server (216);
Erzeugen einer Nonce an dem Server (220);
Übermitteln der Triggernachricht und der Nonce an den Client (224);
Empfangen der Triggernachricht und der Nonce an dem Client (228); und
Bestimmen einer Nonce als eine returned_nonce an dem Client (232);
Erzeugen einer zweiten Nonce an dem Client (236);
Erzeugen einer Antwortnachricht auf die Triggernachricht, die von dem Server (240) erhalten wurde;
Übermitteln der Antwortnachricht, der returned_nonce und der second_nonce an den Server (244);
Vergleichen des Werts der returned_nonce mit dem Wert der Nonce, die an dem Server (248) erzeugt wurde.

2. Verfahren wie in Anspruch 1 beschrieben, und das ferner Folgendes umfasst:
Vorbestimmen eines Werts außerhalb der Begrenzung für die Nonce;
Überprüfen der Nonce, um zu ermitteln, ob der Wert der Nonce der Wert außerhalb der Begrenzung ist.

3. Verfahren wie in Anspruch 1 beschrieben, und das ferner Folgendes umfasst:
Bestätigen des Werts der returned_nonce an dem Server, und Übermitteln einer Antwortnachricht von dem Client an den Server.

4. Verfahren wie in einem der Ansprüche 1 bis 3 beschrieben, und das ferner Folgendes umfasst: Empfangen einer Antwortnachricht und einer false_nonce von dem Client an dem Server (252); Bestimmen, dass die false_nonce falsch ist; Ignorieren der Antwortnachricht (256) des Client.

5. Verfahren wie in Anspruch 1 beschrieben zur Verwendung in einem auf Kerberos basierenden System, wobei ein Schlüsselverteilungszentrum (504) konfiguriert ist, um als eine vertrauenswürdige dritte Partei zu wirken.

6. Verfahren wie in Anspruch 5 beschrieben, und das ferner Folgendes umfasst:
Übermitteln der Triggernachricht und der Nonce an den Client (224),
um eine Schlüsselverwaltungssitzung zwischen dem Server und dem Client zu initiieren.

7. Verfahren wie in Anspruch 6 beschrieben, und das ferner Folgendes umfasst:
Empfangen der Triggernachricht und der Nonce an dem Client (228);
Erzeugen einer Antwortnachricht auf die Triggernachricht;
Übermitteln der Antwortnachricht und einer returned_nonce an den Server.

8. Verfahren wie in Anspruch 7 beschrieben, und das ferner Folgendes umfasst:
Bestätigen des Werts der returned_nonce an dem Server, und dann das Fortfahren mit der Schlüsselverwaltungssitzung.

9. Verfahren wie in Anspruch 5 beschrieben, und das ferner Folgendes umfasst:
Empfangen einer Antwortnachricht und einer false_nonce von dem Client (252) an dem Server;
Bestimmen, dass die false_nonce nicht mit der Nonce (256) übereinstimmt;
Bestimmen, dass der Server die Schlüsselverwaltungssitzung nicht initiiert hat.

10. Verfahren wie in Anspruch 1 beschrieben für einen Kabeltelephonieadapter (CTA) (501) und ein Signalisierungssteuergerät (502) in einem Internet-Telephonie-Netz, wobei das Verfahren ferner Folgendes umfasst:
Bereitstellen des Signalisierungssteuergeräts (502) als Server;
Bereitstellen des CTA (501), der konfiguriert ist, um an das Signalisierungssteuergerät (502) als Client gekoppelt zu werden;
Bereitstellen eines Schlüsselverteilungszentrums (KDC) (504);
Erzeugen der Triggernachricht an dem Signalisierungssteuergerät;
Erzeugen der Nonce an dem Signalisierungssteuergerät; Koppeln der Nonce mit der Triggernachricht;
Übertragen der mit der Triggernachricht gekoppelten Nonce an das CTA; Erzeugen einer Antwortnachricht auf die Triggernachricht;
Verwenden des Werts der Nonce als den Wert einer returned_nonce; Koppeln der Antwortnachricht mit der returned_nonce;
Erzeugen einer second_nonce an dem Client;
Übertragen der returned_nonce, second_nonce und der Antwortnachricht an das Signalisierungssteuergerät;
Vergleichen der returned_nonce mit der Nonce; Übertragen einer AP-Antwort als Antwort auf die Antwortnachricht und die second_nonce;
Übertragen einer wiedergewonnenen SA-Nachricht an das Signalisierungssteuergerät.

11. Verfahren wie in Anspruch 1 beschrieben zum Übermitteln eines Schlüssels von einem Server an einen Client, das ferner Folgendes umfasst:
Erzeugen einer Reaktivierungsnachricht an dem Server; Erzeugen einer server_nonce an dem Server;
Übermitteln der Reaktivierungsnachricht und der server_nonce an den Client; Erzeugen einer AP-Aufforderungsnachricht an dem Client;
Erzeugen einer second_nonce an dem Client;
Übermitteln einer client_nonce und der AP-Aufforderungsnachricht an den Server; und
Bestätigen, dass die client_nonce, die mit der AP-Aufforderungsnachricht übermittelte second_nonce mit der an dem Server erzeugten server_nonce übereinstimmt.

12. Verfahren wie in Anspruch 1 beschrieben zum Bestätigen, dass eine durch einen Server von einem Client empfangene Nachricht durch den Server getriggert wurde, das ferner Folgendes umfasst:
Empfangen einer AP-Aufforderungsnachricht von dem Client;
Empfangen einer second_nonce von dem Client;
Empfangen einer client_nonce von dem Client, wobei die client_nonce mit der AP-Aufforderung assoziiert wird; und
Bestimmen, ob die client_nonce mit einer von dem Server übermittelten Nonce übereinstimmt.

13. Verfahren wie in Anspruch 12 beschrieben und das ferner Folgendes umfasst:
Bestimmen, dass die client_nonce nicht mit der von dem Server übermittelten Nonce übereinstimmt; und
Ignorieren der AP-Aufforderung.

14. Verfahren wie in Anspruch 13 beschrieben, und das ferner Folgendes umfasst:
Warten an dem Client auf eine Antwort von dem Server auf die AP-Aufforderung;
Abbrechen der AP-Aufforderungssitzung nach einem vorbestimmten Zeitraum, wenn keine Antwort von dem Server empfangen wird.

15. Verfahren wie in Anspruch 12 beschrieben, und das ferner Folgendes umfasst:
Bestimmen, dass die client_nonce mit der von dem Server übermittelten Nonce übereinstimmt; und
Erzeugen einer AP-Antwort an dem Server auf die AP-Aufforderung.

16. Ein System zum Bereitstellen von Schlüsselverwaltung in einem auf Kerberos basierenden System, wobei das System Folgendes umfasst:
einen Server;
einen Client, der konfiguriert ist, um an den Server gekoppelt zu werden;
ein Schlüsselverteilungszentrum, das konfiguriert ist, um für den Client und den Server als eine vertrauenswürdige dritte Partei zu wirken;
**gekennzeichnet durch**:
einen Computercode, der betriebsfähig ist, um eine Triggernachricht an dem Server zu erzeugen;
einen Computercode, der an den Server gekoppelt ist, der betriebsfähig ist, um eine Nonce an dem Server zu erzeugen;
einen Computercode, der an den Server gekoppelt ist, der betriebsfähig ist, um die Triggernachricht und die Nonce an den Client zu übermitteln;
einen Computercode, der an den Client gekoppelt ist, der betriebsfähig ist, um die Triggernachricht und die Nonce an dem Client zu empfangen;
einen Computercode, der an den Client gekoppelt ist, der betriebsfähig ist, um eine Nonce als eine returned_nonce an dem Client zu bestimmen;
einen Computercode, der an den Client gekoppelt ist, der betriebsfähig ist, um eine second_nonce an dem Client zu erzeugen;
einen Computercode, der an den Client gekoppelt ist, der betriebsfähig ist, um eine Antwortnachricht auf die Triggernachricht zu erzeugen;
einen Computercode, der an den Client gekoppelt ist, der betriebsfähig ist, um die Antwortnachricht, die returned_nonce und die second_nonce an den Server zu übermitteln;
einen Computercode, der an den Server gekoppelt ist, der betriebsfähig ist, um den Wert der returned_nonce mit dem Wert der Nonce, die **durch** den Server erzeugt wurde, zu vergleichen.

## Revendications

1. Une méthode destinée à fournir une gestion de clés comportant :
fournir un serveur (204) ;
fournir un client (208) configuré pour être couplé audit serveur (204) ;
fournir une tierce partie de confiance (212) configurée pour être couplée audit client (208) ;
**caractérisée par**,
générer un message déclencheur au niveau dudit serveur (216) ;
générer un nonce au niveau dudit serveur (220) ;
acheminer ledit message déclencheur et ledit nonce jusqu'audit client (224) ;
recevoir ledit message déclencheur et ledit nonce au niveau dudit client (228) ; et
désigner un nonce comme étant un returned_nonce (nonce_renvoyé) au niveau dudit client (232) ;
générer un deuxième nonce au niveau dudit client (236) ;
générer un message réponse au message déclencheur qui a été reçu du serveur (240) ;
acheminer le message réponse, le returned_nonce, et le second_nonce (deuxième_nonce) jusqu'au serveur (244) ;
comparer la valeur du returned_nonce à la valeur du nonce qui a été généré au niveau du serveur (248).

2. La méthode telle que décrite dans la revendication 1, et comportant de plus :
prédéterminer une valeur hors-limites pour ledit nonce ;
vérifier ledit nonce pour déterminer si la valeur dudit nonce est ladite valeur hors-limites.

3. La méthode telle que décrite dans la revendication 1, et comportant de plus :
confirmer la valeur dudit returned_nonce au niveau dudit serveur ; et acheminer un message réponse dudit client jusqu'audit serveur.

4. La méthode telle que définie dans l'une des revendications 1 à 3, et comportant de plus : recevoir dudit client un message réponse et un false_nonce (nonce_faux) au niveau dudit serveur (252) ; déterminer que ledit false-nonce est faux ; ne pas tenir compte du message réponse dudit client (256).

5. La méthode telle que décrite dans la revendication 1, destinée à être utilisée dans un système basé sur Kerberos, dans laquelle un centre de distribution de clés (504) est configuré pour faire office de tierce partie de confiance.

6. La méthode telle que décrite dans la revendication 5, et comportant de plus :
acheminer ledit message déclencheur et ledit nonce jusqu'audit client (224) ;
de sorte à initier une session de gestion de Clés entre ledit serveur et ledit client.

7. La méthode telle que décrite dans la revendication 6, et comportant de plus :
recevoir ledit message déclencheur et ledit nonce au niveau dudit client (228) ;
générer un message réponse audit message déclencheur ;
acheminer ledit message réponse et un returned_nonce jusqu'audit serveur.

8. La méthode telle que décrite dans la revendication 7, et comportant de plus :
confirmer la valeur dudit returned_nonce au niveau dudit serveur ; et poursuivre ensuite ladite session de gestion de clés.

9. La méthode telle que décrite dans la revendication 5, et comportant de plus:
recevoir au niveau dudit serveur un message réponse et un false_nonce dudit client (252) ;
déterminer que ledit false_nonce ne correspond pas audit nonce (256) ;
déterminer que ledit serveur n'a pas initié ladite session de gestion de clés.

10. La méthode telle que décrite dans la revendication 1, destinée à un adaptateur de téléphonie par câble (CTA) (501) et un Contrôleur de Signalisation (502) dans un réseau de Téléphonie IP, la méthode comportant de plus :
fournir ledit Contrôleur de Signalisation (502) en tant que dit serveur ;
fournir ledit CTA (501) configuré pour être couplé audit Contrôleur de Signalisation (502) en tant que dit client ;
fournir un centre de distribution de clés (KDC) (504) ;
générer ledit message déclencheur au niveau dudit Contrôleur de Signalisation ;
générer ledit nonce au niveau dudit Contrôleur de Signalisation ; coupler ledit nonce avec ledit message déclencheur ;
transmettre ledit nonce couplé avec ledit message déclencheur audit CTA ; générer un message réponse audit message déclencheur ;
utiliser la valeur dudit nonce en tant que valeur d'un returned_nonce ; coupler ledit message réponse avec ledit returned_nonce ;
générer un second_nonce au niveau du client;
transmettre ledit returned_nonce, le second_nonce et ledit message réponse audit Contrôleur de Signalisation ;
comparer ledit returned_nonce audit nonce ; transmettre une réponse AP en réponse audit message réponse et au second_nonce;
transmettre un message récupéré SA audit Contrôleur de Signalisation.

11. La méthode telle que décrite dans la revendication 1, destinée à acheminer une clé d'un serveur jusqu'à un client, comportant de plus :
générer un message réveil au niveau dudit serveur ; générer un server_nonce (nonce_serveur) au niveau dudit serveur ;
acheminer ledit message réveil et ledit server_nonce jusqu'audit client; générer un message de requête AP au niveau dudit client;
générer un second_nonce au niveau du client;
acheminer un client_nonce (nonce_client) et ledit message de requête AP jusqu'audit serveur ; et
confirmer que ledit client_nonce, le second_nonce acheminé avec ledit message de requête AP corresponde audit server_nonce
généré au niveau dudit serveur.

12. La méthode telle que décrite dans la revendication 1, destinée à confirmer qu'un message reçu par un serveur d'un client a été déclenché par le serveur, comportant de plus :
recevoir un message de requête AP dudit client ;
recevoir un second_nonce dudit client ;
recevoir un client-nonce dudit client dans laquelle ledit client_nonce est associé à ladite requête AP ; et
déterminer si ledit client_nonce correspond à un nonce acheminé depuis ledit serveur.

13. La méthode telle que décrite dans la revendication 12, et comportant de plus :
déterminer que ledit client_nonce ne correspond pas audit nonce acheminé depuis ledit serveur ; et
ne pas tenir compte de ladite requête AP.

14. La méthode telle que décrite dans la revendication 13, et comportant de plus :
attendre au niveau dudit client une réponse dudit serveur à ladite requête AP ;
abandonner ladite session de requête AP au bout d'une période de
temps prédéterminée si aucune réponse n'est reçue dudit serveur.

15. La méthode telle que décrite dans la revendication 12, et comportant de plus :
déterminer que ledit client_nonce correspond bien audit nonce acheminé depuis ledit serveur ; et
générer une réponse AP au niveau dudit serveur à ladite requête AP.

16. Un système destiné à fournir une gestion de clés dans un système basé sur Kerberos ledit système comportant :
un serveur ;
un client configuré pour être couplé audit serveur ;
un centre de distribution de clés configuré pour faire office de tierce partie de confiance pour ledit client et ledit serveur ;
**caractérisé par**,
du code informatique pouvant être activé pour générer un message déclencheur au niveau dudit serveur ;
du code informatique couplé audit serveur pouvant être activé pour générer un nonce au niveau dudit serveur ;
du code informatique couplé audit serveur pouvant être activé pour acheminer ledit message déclencheur et ledit nonce jusqu'audit client;
du code informatique couplé audit client pouvant être activé pour recevoir ledit message déclencheur et ledit nonce au niveau dudit client ;
du code informatique couplé audit client pouvant être activé pour désigner un nonce comme étant un returned_nonce au niveau dudit client ;
du code informatique couplé audit client pouvant être activé pour générer un second_nonce au niveau dudit client ;
du code informatique couplé audit client pouvant être activé pour générer un message réponse audit message déclencheur ;
du code informatique couplé audit client pouvant être activé pour acheminer ledit message réponse, le returned_nonce et le second_nonce jusqu'audit serveur ;
du code informatique couplé audit serveur pouvant être activé pour comparer la valeur du returned_nonce à la valeur du nonce qui a été généré par le serveur.
